# EUROPEAN PATENT APPLICATION

(11) **EP 2 107 819 A1**
(43) Date of publication of application: **07.10.2009**
(21) Application number: 08715228.6
(22) Date of filing: 13.03.2008
(51) Int. Cl.: H04Q 7/38, H04Q 7/22

(54) **THE METHOD, SYSTEM AND CN NODE FOR LOAD TRANSFERRING IN THE POOL AREA**

(30) Priority: 18.04.2007 CN 200710097911
(71) Applicant: Huawei Technologies Co., Ltd., Longgang District, Shenzhen Guangdong 518129 (CN)
(72) Inventor: HUI, Tao, Shenzhen Guangdong 518129 (CN); WU, Xiaoming, Shenzhen Guangdong 518129 (CN); CUI, Xiaochun, Shenzhen Guangdong 518129 (CN); YE, Sihai, Shenzhen Guangdong 518129 (CN); FANG, Jun, Shenzhen Guangdong 518129 (CN)
(74) Representative: Barth, Stephan Manuel
(86) International application number: PCT/CN2008/070492
(87) International publication number: WO 2008/128452

(57) **Abstract**

A method for implementing load migration in a pool area is disclosed. The method includes that: the destination CN node receives an identifier of a subscriber ready for migration; and the destination CN node migrates the subscriber ready for migration to the destination CN node, and allocates a local office identifier to the migrated subscriber. In addition, a system for implementing load migration in a pool area and a CN node are disclosed.

## Description

This application claims priority to Chinese Patent Application No. 200710097911.0, filed with the Chinese Patent Office on April 18, 2007 and entitled "Method, System and Core Network Node for Implementing Load Migration in Pool Area", which is hereby incorporated by reference in its entirety.

### FIELD OF THE INVENTION

The present invention relates to mobile communication, and in particular, to a method, a system, and a Core Network (CN) node for implementing load migration in a pool area.

### BACKGROUND

In the architecture of a traditional mobile communication network, a Base Station Controller (BSC) or a Radio Network Controller (RNC) can be connected to only one CN node. Such a networking mode is not flexible, makes the network planning complicated, and increases the cost of network equipment. In order to solve such problems, since Third Generation Partnership Projects R5 (3GPP R5), an Iu-Flex function has been introduced into the Wideband Code Division Multiple Access (WCDMA), Time-Division Synchronization Code Division-Multiple-Access (TD-SCDMA), Global System for Mobile Communications (GSM), namely, the intra-domain connection routing function which enables one BSC or RNC to be connected with multiple CN nodes is supported. An area served by multiple CN nodes is called a pool area. Load balance is implemented among multiple CN nodes in the pool area. The service scope provided by the CN nodes covers the whole pool area. The User Equipment (UE) moves in the pool area without the need of changing the serving CN nodes. In this way, the node update, switching and relocating between CNs are reduced, and the update traffic of the Home Location Register (HLR) is reduced.

One of the functions of the pool area is load reallocation. When a Mobile Switching Center (MSC) or a Serving GPRS Supporting Node (SGSN) needs upgrade, or when the load in the pool area is abnormal, the load reallocation function enables migration of the subscribers on an MSC or SGSN to other MSCs or SGSNs in the pool area.

Taking the Circuit Switched (CS) domain as an example, the load migration process in the prior art is described below: An Operation and Maintenance System (O&M) system notifies the MSC and the BSC/RNC to get uninstalled; when the UE initiates location update or when a call is connected to an uninstalled MSC, the MSC allocates a specific Network Resource Indication (null-NRI) and a non-broadcast Location Area Identifier (LAI) to the UE through a location update acceptance message or a Temporary Mobile Subscriber Identifier (TMSI). When the UE in the idle state detects that the LAI in the system information broadcast is different from the Non-Broadcast LAI received by UE, the UE initiates the location update process again. After receiving the initial Non Access Stratum (NAS) signaling of the location update, the BSC/RNC exports a null-NRI from the TMSI, and reselects an MSC through a load balance algorithm. In this case, the uninstalled MSC falls outside the options of the MSC.

Evidently, the load migration process in the prior art needs collaboration of the UE. However, some UEs on the market currently are unable to initiate location update upon receiving the non-broadcast LAI. For such UEs, if the load migration is performed according to the prior art, some services of the subscriber may fail, the Quality of Service (QoS) may deteriorate, and the user experience is affected.

### SUMMARY

A method, a system and a CN node for implementing load migration in a pool area are disclosed in an embodiment of the present invention to ensure QoS in the load migration process.

In order to fulfill the foregoing objective, the load migration method disclosed herein includes:
receiving, by a destination CN node, an identifier of a subscriber ready for migration; and
migrating the subscriber ready for migration to the destination CN node, and allocating a local office identifier to the migrated subscriber.

The method further includes:
sending, by a source CN node, the identifier of the subscriber ready for migration to the destination CN node; or
sending, by an O&M, the identifier of the subscriber ready for migration to the destination CN node.

If the CN node is an MSC, the process of the destination CN node migrating the subscriber ready for migration to the destination CN node includes:
sending, by a destination MSC, a location update request to the HLR that is home to the subscriber ready for migration according to the received subscriber identifier; and
inserting, by the HLR, the subscriber data of the subscriber ready for migration into a Visitor Location Register (VLR) corresponding to the destination MSC after receiving the location update request, modifying the current location of the subscriber ready for migration in the HLR to be the VLR corresponding to the destination MSC, and notifying the source MSC to delete the migrated subscriber data.

The method further includes:
sending, by the source MSC, a subscriber state and a current LAI of the subscriber ready for migration to the destination MSC; and
storing, by the destination MSC, the subscriber state and the current LAI in the corresponding VLR.

The process of the destination CN node allocating the local office identifier to the subscriber ready for migration includes:
allocating, by the destination MSC, a TMSI inclusive of the local office identifier to the subscriber ready for migration, and sending the TMSI to the source MSC; and
sending, by the source MSC, the TMSI to the subscriber ready for migration through a location update acceptance message or a TMSI reallocation command message.

After the source MSC sends the destination MSC identifier to the subscriber ready for migration, the method includes:
returning, by the subscriber ready for migration, a TMSI reallocation completion message to the source MSC; and
notifying, by the source MSC, the destination MSC that the TMSI reallocation is completed after receiving the message, and sending a clear command to the BSC or RNC that covers the subscriber ready for migration to release the radio resource connection.

The subscriber identifier is an International Mobile Station Identifier (IMSI).

If the subscriber identifier is a TMSI, the process of the destination MSC sending the location update request to the HLR that is home to the subscriber ready for migration according to the received subscriber identifier includes:
obtaining, by the destination MSC, the subscriber IMSI from an air interface or an E-interface by using the received TMSI, and sending a location update request to the HLR by using the IMSI as a parameter.

If the CN node is an SGSN, the process of the destination CN node migrating the subscriber ready for migration to the destination CN node includes:
sending, by the destination SGSN, a routing area update request to the HLR that is home to the subscriber ready for migration according to the received subscriber identifier; and
inserting, by the HLR, the subscriber data of the subscriber ready for migration into the destination SGSN after receiving the routing area update request, and notifying the source SGSN to delete the migrated subscriber data.

The method further includes:
sending, by the source SGSN, a subscriber state and a current Routing Area Identifier (RAI) of the subscriber ready for migration to the destination SGSN; and
storing, by the destination SGSN, the subscriber state and the current RAI.

The process of the destination CN node allocating the local office identifier to the subscriber ready for migration includes:
allocating, by the destination SGSN, a Packet TMSI (P-TMSI) inclusive of the local office identifier to the subscriber ready for migration, and sending the P-TMSI to the source SGSN; and
sending, by the source SGSN, the P-TMSI to the subscriber ready for migration through a routing area update acceptance message or a P-TMSI reallocation command message.

After the source SGSN sends the destination SGSN identifier to the subscriber ready for migration, the method includes:
returning, by the subscriber ready for migration, a P-TMSI reallocation completion message to the source SGSN; and
notifying, by the source SGSN, the destination SGSN that the P-TMSI reallocation is completed after receiving the message, and sending a clear command to the BSC or RNC that covers the subscriber ready for migration to release the radio resource connection.

The subscriber identifier is an IMSI.

If the subscriber identifier is a P-TMSI, the process of the destination SGSN sending the routing area update request to the HLR that is home to the subscriber ready for migration according to the received subscriber identifier includes: obtaining, by the destination MSC, the subscriber IMSI from an air interface or an E-interface by using the received P-TMSI, and sending a routing area update request to the HLR by using the IMSI as a parameter.

Optionally, before the source CN node sends the identifier of the subscriber ready for migration to the destination CN node, the method further includes:
judging whether the UE supports load migration after the source CN node receives a notification indicating the need of load migration from the O&M or receives a location update request or a routing area update request from the UE; and
sending the identifier of the subscriber ready for migration to the destination CN node if the UE does not support load migration.

The judging about whether the UE supports load migration includes:
obtaining information about the model of the UE;
querying the UE load migration capability support table preset on the source CN node according to the information about the model of the UE, where the UE load migration capability support table includes at least: the model of the UE, and information about support of the load migration function;
determining that the UE supports the load migration function if the query succeeds; or
determining that the UE does not support the load migration function if the query fails.

A system for implementing load migration in a pool area is disclosed in an embodiment of the present invention. The system includes:
a destination CN node, adapted to: send a location update request or a routing area update request to the HLR that is home to the subscriber ready for migration according to the received subscriber identifier after receiving the subscriber identifier of the subscriber ready for migration, and allocating the identifier of the local office to the subscriber ready for migration;
an HLR, adapted to: insert the subscriber data of the subscriber ready for migration into the destination CN node after receiving the request, and notify the source CN node to delete the migrated subscriber data; and
a source CN node, adapted to delete the migrated subscriber data after receiving the notification.

The source CN node is further adapted to send the subscriber state and the current LAI or RAI of the subscriber ready for migration to the destination CN node.

The destination CN node is further adapted to store the information received from the source CN node.

Optionally, the source CN node is further adapted to: judge whether the UE supports load migration when receiving a notification indicating the need of load migration from the O&M or receiving a location update request or a routing area update request from the UE; and send the identifier of the subscriber ready for migration to the destination CN node if the UE does not support load migration.

A CN node is disclosed in an embodiment of the present invention. The CN node includes:
a receiving unit, adapted to: receive information about the identifier of the subscriber ready for migration, and send the identifier of the subscriber ready for migration to a redirecting unit; and
a redirecting unit, adapted to: send a location update request or a routing area update request to the HLR that is home to the subscriber ready for migration according to the received subscriber identifier after receiving the subscriber identifier of the subscriber ready for migration, migrate the subscriber ready for migration to the CN node, and allocate the identifier of the CN node to the migrated subscriber.

A CN node is disclosed in an embodiment of the present invention. The CN node includes:
a sending unit, adapted to send the subscriber state and the LAI of the subscriber ready for migration; and
a deleting unit, adapted to delete the migrated subscriber data after receiving a notification from the HLR that is home to the subscriber ready for migration, where the notification requires deletion of the migrated subscriber data.

Therefore, in the present invention, when it is necessary to uninstall the source CN node and migrate the subscriber on the source CN node to the destination CN node, the source CN node does not need to deliver the information such as null-NRI and non-broadcast LAI or non-broadcast RAI to the subscriber ready for migration; the UE does not need to initiate location update or routing area update proactively according to the non-broadcast LAI or non-broadcast RAI either; instead, the destination CN node initiates a location update process or a routing area update process proactively, migrates the subscriber ready for migration to the destination CN node, and allocates a TMSI or P-TMSI inclusive of the local office identifier of the destination CN node to the subscriber ready for migration. In this way, when the subscriber ready for migration uses the destination CN node identifier to initiate a service, the BSC or RNC can route the service to the CN node that stores the subscriber data, and perform a normal service process, without leading to service failure. Therefore, the QoS is ensured, and the load migration does not affect the user experience.

### BRIEF DESCRIPTION OF THE DRAWINGS

FIG. 1 is a flowchart of load migration in the first embodiment of the present invention;

FIG. 2 is a flowchart of load migration in the second embodiment of the present invention;

FIG. 3 is a flowchart of load migration in the third embodiment of the present invention;

FIG. 4 is a flowchart of load migration in the fourth embodiment of the present invention;

FIG. 5 shows a structure of a system for implementing load migration in a pool area in an embodiment of the present invention;

FIG. 6 shows a structure of a CN node in an embodiment of the present invention; and

FIG. 7 shows a structure of another CN node in an embodiment of the present invention.

### DETAILED DESCRIPTION

In order to make the technical solution, objectives and merits of the present invention clearer, the invention is detailed below by reference to accompanying drawings and preferred embodiments.

As described above, for the UE that does not support proactive initiation of location update, the existing load migration method tends to lead to failure of certain services of the user and deteriorate the QoS, for example, lead to failure of call termination within up to a location update period. Specifically, after the MSC ready for uninstalling allocates the null-NRI and the non-broadcast LAI to the subscriber, the UE does not initiate location update proactively at once. In this case, when the subscriber serves as a called party, the paging message is delivered from the MSC ready for uninstalling, and the UE returns the paging response message that carries a null-NRI. In this case, the BSC or the RNC routes the paging response message to another MSC in the pool according to the null-NRI. Consequently, the call service process of the subscriber fails.

In view of the foregoing characteristics, a method for implementing load migration in a pool area is disclosed in an embodiment of the present invention. When it is necessary to migrate the subscriber on the source CN node to the destination CN node, the identifier of the subscriber ready for migration is sent to the destination CN node first; the destination CN node initiates update (such as location update and routing area update) proactively according to the received subscriber identifier after receiving the subscriber identifier of the subscriber ready for migration, and migrates the subscriber ready for migration to the destination CN node; meanwhile, the destination CN node allocates the TMSI or P-TMSI inclusive of the local office identifier (such as local office Network Resource Identifier (NRI)) to the subscriber ready for migration. In this way, when the subscriber ready for migration uses the TMSI or P-TMSI inclusive of the destination CN node identifier to initiate a service, the BSC or RNC can route the service to the CN node that stores the subscriber data, and perform a normal service process, without leading to service failure.

The identifier of the subscriber ready for migration may be sent by the source CN node to the destination CN node or sent by the O&M or other interfaces to the destination CN node.

The CN node is an MSC in the CS domain, and is an SGSN in the Packet Switched (PS) domain.

In order to make the present invention clearer, the load migration process in the CS domain and the PS domain is elaborated below through several embodiments. The first embodiment corresponds to the migration in the case of location update in the CS domain, the second embodiment corresponds to the migration in the call origination service or call termination service in the CS domain, the third embodiment corresponds to the migration in the case of routing area update in the PS domain, and the fourth embodiment corresponds to the migration in the call origination service or call termination service in the PS domain.

In the embodiments of the present invention, when it is necessary to migrate the subscriber on the CN node ready for uninstalling (namely, the source CN node) to a specified destination CN node, the O&M notifies the source CN node to get installed, and sends the information about the subscriber ready for migration and the information about the destination CN node to the source CN node. Such information includes: IMSI number segment of the subscriber ready for migration, and the NRI of the destination CN node or the address of the destination CN node or the name of the destination CN node. The source CN node queries the NRI number table according to the destination NRI indicated by the O&M to determine the destination MSC, or determines the destination MSC according to the destination MSC address indicated by the O&M, or determines the destination MSC according to the destination MSC name indicated by the O&M. In the following embodiments, the O&M chooses to send the NRI corresponding to the destination MSC or SGSN to the source MSC or SGSN.

The subscriber(s) ready for migration may be all or part of the subscribers on the source CN node, or a specified subscriber, or a subscriber in a specified Radio Access Network (RAN) area or a specified LAI area.

### Embodiment 1

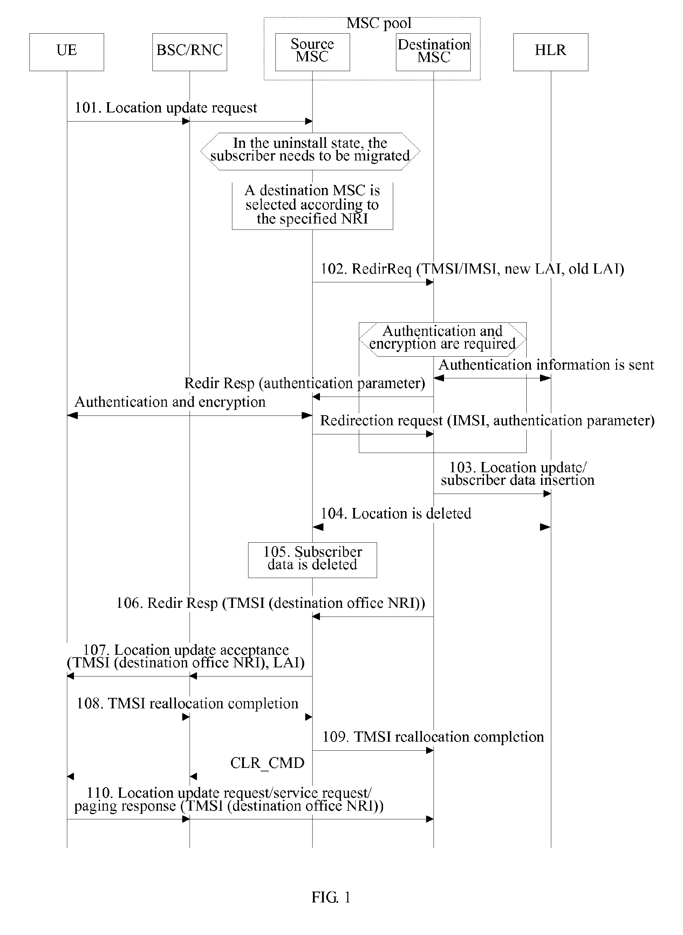

As shown in FIG. 1, the load migration process in this embodiment includes the following steps:

Step 101: The UE sends a location update request to the source MSC through a BSC or an RNC.

Step 102: After receiving the location update request from the UE, the source MSC judges whether the UE meets the migration conditions. For example, the source MSC judges whether the UE is a subscriber ready for migration and whether the UE is located in the RAN where the Iu/A-Flex is enabled according to the IMSI number segment of the UE. If the migration conditions are met, the source MSC queries the NRI number table according to the destination NRI indicated by the O&M to determine the destination MSC, and sends a redirection request (Redir Req) message to the destination MSC.

If the query fails, the source MSC performs location update in the local office directly, without migrating the subscriber.

The redirection request message generally carries the subscriber information such as the subscriber identifier of the UE and the new LAI (namely, the LAI that currently covers the subscriber). Generally, the IMSI is preferred as the subscriber identifier; if no IMSI exists, the TMSI may also be used as the subscriber identifier. When the subscriber identifier is a TMSI, the redirection request message may further carry the old LAI (namely, the LAI that previously covers the subscriber). Besides, the redirection request message may also carry the subscriber state. If the authentication and encryption information of the subscriber exists in the source MSC, the redirection request message may further carry the authentication and encryption information.

The redirection request message may be obtained as a result of extending the existing signaling message (for example, extending the Mobile Application Part (MAP) signaling), or may be a newly added signaling message.

It is worthy of attention that the present invention is applicable to all such fields as GSM, CDMA, WCDMA and TD-SCDMA. When the present invention is applied to a CDMA network, the redirection request message may need to further carry a timeslot index for the purpose of service processing.

Step 103: After receiving the redirection request message from the source MSC, the destination MSC uses the IMSI carried in the message as a subscriber identifier, and uses the VLR currently corresponding to the destination MSC as the current VLR of the subscriber ready for migration, and sends a location update request (MAP_LOC_UPDATE_REQ) to the HLR that is home to the subscriber ready for migration to trigger a standard process of updating the location of a subscriber who roams between different VLR areas.

The standard process of updating the location of a subscriber who roams between different VLR areas is the same as that in the prior art, and is not repeated here any further. The result of the process is: All the subscriber data of the subscriber ready for migration is inserted into the VLR corresponding to the destination MSC, and the current location of the subscriber ready for migration in the HLR is the VLR corresponding to the destination MSC. Besides, the VLR corresponding to the destination MSC needs to store the subscriber state and the new LAI sent from the source MSC.

If the subscriber identifier carried in the redirection request message is a TMSI, the destination MSC still needs to retrieve the subscriber IMSI through an E-interface or an air interface. For example, the destination MSC determines the source MSC that covers the subscriber according to the old LAI carried in the redirection request message, and sends a request of obtaining the subscriber IMSI to the source MSC. The request carries the TMSI. After receiving the request, the source MSC returns the subscriber IMSI to the destination MSC. Alternatively, the destination MSC may send a request of obtaining the IMSI to the subscriber ready for migration directly. After receiving the request, the subscriber returns the IMSI to the destination MSC.

Besides, if authentication and encryption are required, the destination MSC still needs to perform authentication and encryption. As shown in FIG. 1, the authentication and encryption process is the same as that in the prior art, and is not repeated here any further. However, if the source MSC has sent the authentication and encryption information to the destination MSC through a redirection message, the destination MSC may use the authentication and encryption information directly to perform authentication and encryption, without the need of retrieving the authentication information from the HLR.

Step 104: The HLR sends a "cancel location" message to the source MSC.

Step 105: After receiving the "cancel location" message, the source MSC deletes the stored migrated subscriber data.

The details of step 105 are: The source MSC compares whether the subscriber IMSI carried in the "cancel location" message is consistent with the subscriber IMSI carried in the redirection request message sent by the source MSC. If they are consistent, the source MSC deletes the subscriber data.

Step 106: The destination MSC allocates a TMSI inclusive of a local office NRI to the UE, and returns a redirection response (Redir Resp) message inclusive of the TMSI to the source MSC.

Step 107: After receiving the redirection response message from the destination MSC, the source MSC sends a TMSI to the UE through a location update acceptance message, where the TMSI is allocated by the destination MSC to the UE and includes a destination office NRI. Besides, the location update acceptance message also carries a LAI, but is not allowed to carry a "follow-on proceed" cell.

If the redirection fails, namely, if the source MSC fails to obtain the TMSI inclusive of the destination office NRI, the source MSC performs location update for the UE and finishes the process. In this case, if the destination MSC has performed authentication and encryption for the UE, the source MSC does not need to perform authentication and encryption for the UE any more.

A redirection timer may be set to judge whether the redirection fails. For example, the duration of the redirection timer (namely, the time interval from the source MSC sending the first redirection request message to receiving the redirection response message) is set to 6 seconds (generally less than 20 seconds). The source MSC determines that the redirection fails if the source MSC does not receive the redirection response message inclusive of the destination office NRI before timeout of the timer.

Step 108: The UE returns a TMSI reallocation completion message to the source MSC.

Step 109: After receiving the TMSI reallocation completion message, the source MSC notifies the destination MSC that the reallocation is completed, and sends a clear command (CLR_CMD) to the BSC or RNC that covers the UE to release the Radio Resource (RR) connection.

If the source MSC does not receive the TMSI reallocation completion message from the UE, the source MSC disengages from the current processing directly, namely, sends a CLR_CMD to the BSC or RNC that covers the UE to release the RR connection.

Step 110: After the UE is migrated to the destination MSC successfully, when the UE initiates a service again, for example, sends a location update request or a service request or a paging response message. Because such messages carry the NRI of the destination MSC, the BSC or RNC routes the messages to the destination MSC directly to perform a normal communication process, without leading to service failure.

### Embodiment 2

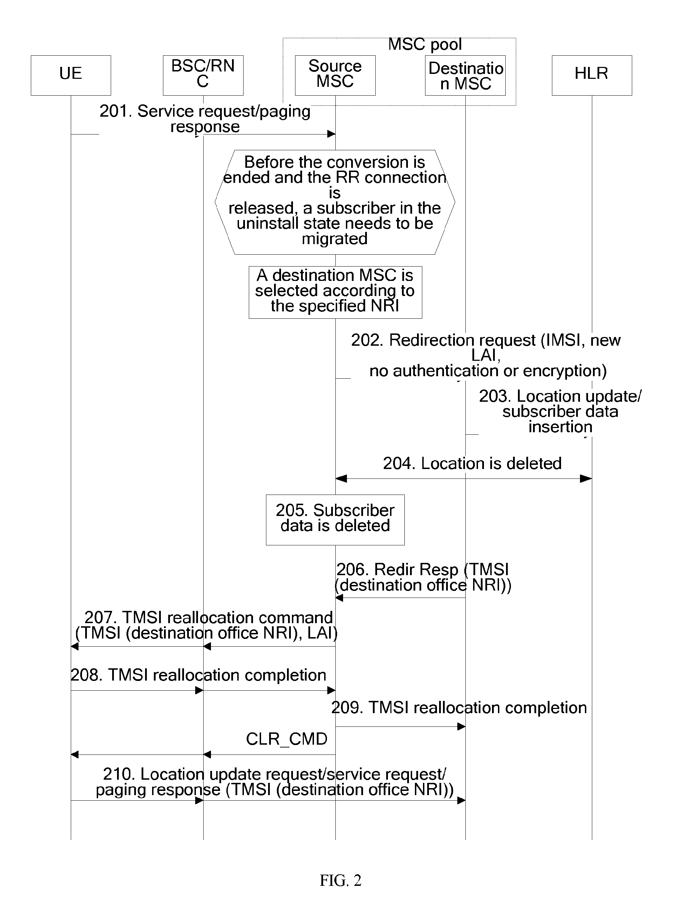

As shown in FIG. 2, the load migration process in this embodiment includes the following steps:

Step 201: The UE sends a service request or a paging response to the source MSC.

Step 202: If the UE fulfills the migration conditions and is located in the RAN where the Iu/A-Flex is enabled, the source MSC queries the NRI number table according to the NRI indicated by the O&M to determine the destination MSC before completion of the conversation and release of the RR connection, and sends a redirection request message to the destination MSC.

If the query fails, the source MSC sends a CLR_CMD to the BSC or RNC that covers the UE to release the RR connection, without migrating the subscriber. The current processing is ended.

The subscriber information carried in the redirection request message includes an IMSI and a new LAI. Optionally, authentication and encryption information may be carried in the message. If no location update is underway, the redirection request message needs to carry an indication of no authentication and encryption additionally.

Step 203: After receiving the redirection request message that indicates no authentication and encryption, the destination MSC does not perform authentication and encryption, but uses the IMSI and the currently corresponding VLR as parameters to perform location update at the HLR that is home to the subscriber ready for migration, inserts all subscriber data of the subscriber ready for migration into the VLR corresponding to the destination MSC, and modifies the current location of the subscriber ready for migration in the HLR to be the VLR corresponding to the destination MSC.

If the source MSC lets the authentication and encryption information be carried in the redirection request message, the destination MSC stores the received authentication and encryption information.

Steps 204-205: These steps are consistent with steps 104-105, and are not repeated here any further.

Step 206: The destination MSC allocates a TMSI inclusive of a local office NRI to the UE, and returns a redirection response message inclusive of the TMSI to the source MSC.

Step 207: After receiving the redirection response message from the destination MSC, the source MSC sends a TMSI to the UE through a TMSI reallocation command message, where the TMSI is allocated by the destination MSC to the UE and includes a destination office NRI. In addition, the TMSI reallocation command message carries a LAI.

If the redirection fails, namely, if the source MSC fails to obtain the TMSI inclusive of the destination office NRI, the source MSC sends a CLR_CMD to release the RR connection and finish the current processing.

Steps 208-210: These steps are consistent with steps 108-110, and are not repeated here any further.

### Embodiment 3

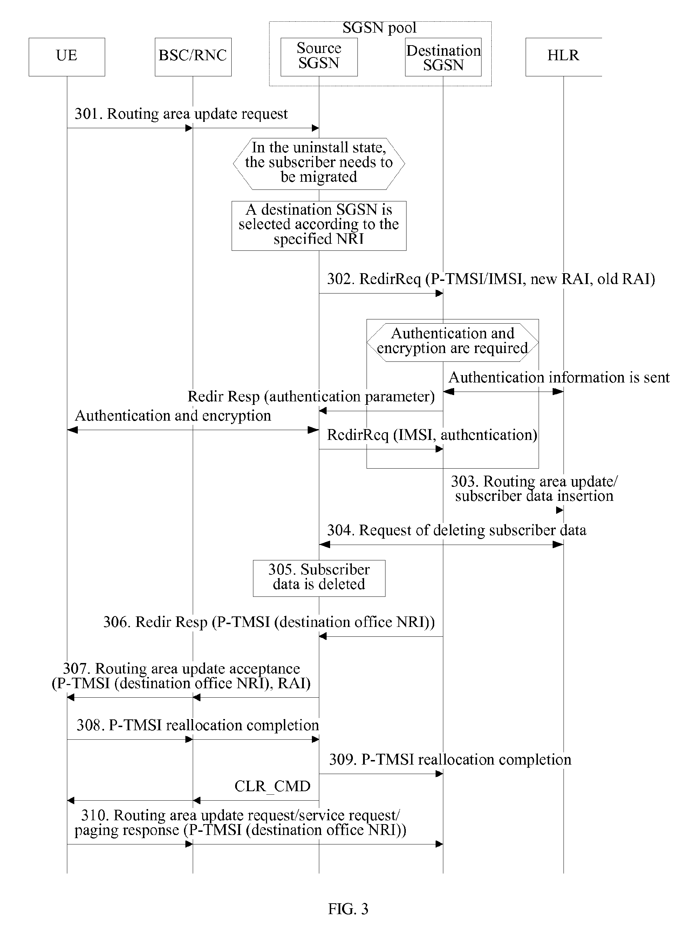

As shown in FIG. 3, the load migration process in this embodiment includes the following steps:

Step 301: The UE sends a routing area update request to the source SGSN.

Step 302: If the UE fulfills the migration conditions and is located in the RAN where the Iu/A-Flex is enabled, the source SGSN queries the NRI number table according to the NRI indicated by the O&M to determine the destination SGSN, and sends a redirection request message to the destination SGSN.

If the query fails, the source SGSN performs routing area update in the local office directly, and finishes the current process.

The third embodiment differs from the first embodiment and the second embodiment in that: The redirection request message carries an IMSI, a P-TMSI, a new RAI, an old RAI, authentication and encryption information, subscriber state, and other subscriber information.

Step 303: After receiving the redirection request message, the destination SGSN uses the IMSI as a parameter to send a routing area update request message to the HLR that is home to the subscriber ready for migration, triggers a standard routing area update process, completes the routing area update, and inserts all subscriber data of the subscriber ready for migration into the destination SGSN.

The authentication and encryption and the retrieving of the IMSI from the E-interface or the air interface are similar to those in the first embodiment, and are not repeated here any further.

Step 304: The HLR sends a request of deleting subscriber data to the source SGSN.

Step 305: After receiving the request of deleting subscriber data, the source SGSN deletes the stored migrated subscriber data.

Step 306: The destination SGSN allocates a P-TMSI inclusive of a local office NRI to the UE, and returns a redirection response message inclusive of the P-TMSI to the source SGSN.

Step 307: After receiving the redirection response message, the source SGSN sends the P-TMSI to the UE through a routing area update acceptance message, where the P-TMSI is allocated by the destination SGSN to the UE and includes a destination office NRI. In addition, the routing area update acceptance message carries an RAI.

If the redirection fails, namely, if the source SGSN does not receive the P-TMSI inclusive of the destination office NRI, the source SGSN performs routing area update for the UE and finishes this process.

Step 308: The UE returns a P-TMSI reallocation completion message to the source SGSN.

Step 309: After receiving the P-TMSI reallocation completion message, the source SGSN notifies the destination SGSN that the reallocation is completed, and sends a CLR_CMD to the BSC or RNC that covers the UE to release the RR connection.

If the source SGSN does not receive the P-TMSI reallocation completion message, the source SGSN disengages from the current processing directly.

Step 310: After the UE is migrated to the destination SGSN successfully, when the UE initiates a service again, for example, sends a routing area update request or a service request or a paging response message, the BSC or RNC routes the messages to the destination SGSN directly to perform a normal communication process without leading to a service failure, for such messages carry the NRI of the destination SGSN.

### Embodiment 4

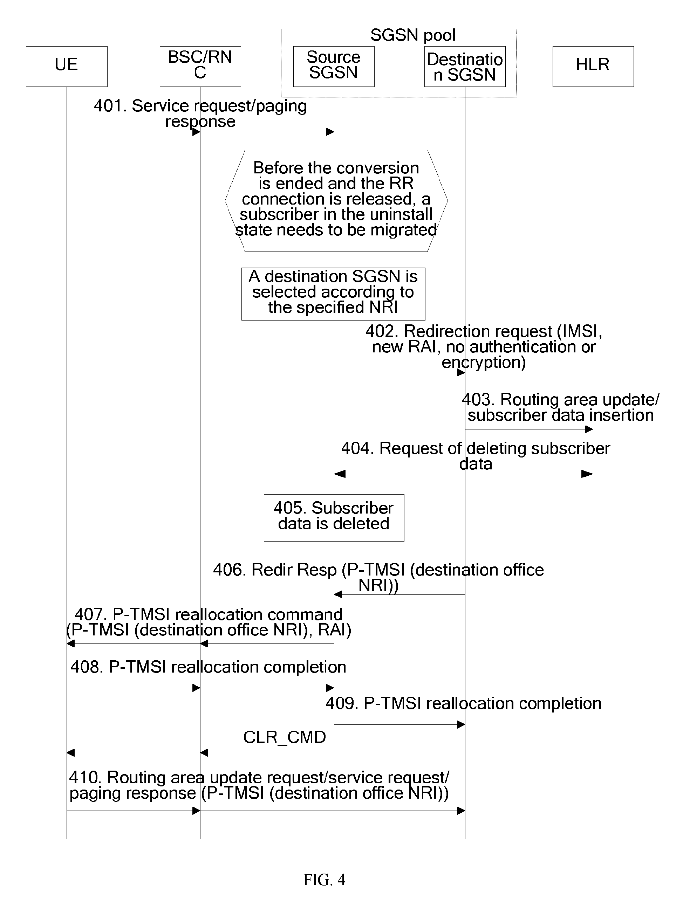

As shown in FIG. 4, the load migration process in this embodiment includes the following steps:

Step 401: The UE sends a service request or a paging response to the source SGSN.

Step 402: If the UE fulfills the migration conditions and is located in the RAN where the Iu/A-Flex is enabled, the source SGSN queries the NRI number table according to the NRI indicated by the O&M to determine the destination SGSN before completion of the conversation and release of the RR connection, and sends a redirection request message to the destination SGSN.

If the query fails, the source SGSN sends a CLR_CMD to the BSC or RNC that covers the UE to release the RR connection, without migrating the subscriber. The current processing is ended.

The subscriber information carried in the redirection request message includes an IMSI and a new RAI. Optionally, authentication and encryption information may be carried in the message. If no routing area update is underway, the redirection request message needs to carry an indication of no authentication and encryption additionally.

Step 403: After receiving the redirection request message that indicates no authentication and encryption, the destination SGSN does not perform authentication and encryption, but uses the IMSI as a parameter, performs routing area update in the HLR that is home to the subscriber ready for migration, and inserts all subscriber data of the subscriber ready for migration into the destination SGSN.

If the source SGSN lets the authentication and encryption information be carried in the redirection request message, the destination SGSN stores the received authentication and encryption information.

Steps 404-405: These steps are consistent with steps 304-305, and are not repeated here any further.

Step 406: The destination SGSN allocates a P-TMSI inclusive of a local office NRI to the UE, and returns a redirection response message inclusive of the P-TMSI to the source SGSN.

Step 407: After receiving the redirection response message, the source SGSN sends a P-TMSI to the UE through a P-TMSI reallocation command message, where the P-TMSI is allocated by the destination SGSN to the UE and includes a destination office NRI. In addition, the P-TMSI reallocation command message carries a RAI.

If the redirection fails, namely, if the source SGSN fails to obtain the P-TMSI inclusive of the destination office NRI, the source SGSN sends a CLR_CMD to release the RR connection and finish the current processing.

Steps 408-410: These steps are consistent with steps 308-310, and are not repeated here any further.

It is worthy of attention that in the foregoing embodiments, the redirection request message is sent from the source CN node to the destination CN node. In practice, the redirection request message may be sent through other interfaces to the destination CN node. For example, the O&M sends the redirection request message to the CN node to notify the destination CN node to perform location update.

Besides, in the foregoing embodiments, the basic order of the steps in whole load migration process is: sending the redirection request message first, and then performing the location update or routing area update process, and finally deleting the subscriber data stored on the source CN node. In practice, the three steps may be in any order. For example, the location update or routing area update process is performed first; and then the IMSI of the subscriber ready for migration, the current LAI or RAI, and the subscriber state are sent through a redirection request message to the destination CN node; and finally the subscriber data stored on the source CN node is deleted. If the location update or routing area update process is performed first, the destination CN node needs to obtain the IMSI of the subscriber ready for migration beforehand, for example, through an O&M interface or a source CN node.

Besides, another embodiment of the present invention is: When the source CN node receives a load migration notification from the O&M or receives a location update request or a routing area update request from the UE, the source CN node obtains the UE model information, or additionally, the UE version information first, and then judges whether the UE supports the load migration function according to such information, for example, by querying the load migration capability support table of the UE.

If the UE supports load migration, the load migration is performed according to the prior art. That is, the source CN node allocates a null-NRI and a non-broadcast LAI or non-broadcast RAI to the UE. Upon receiving the non-broadcast LAI or non-broadcast RAI, the UE initiates location update or routing area update immediately. The NAS Node Selection Function (NNSF) node selects a destination CN node according to the null-NRI in the location update message or routing area update message. The location update message or routing area update message sent by the UE is routed to the selected destination CN node.

If the UE does not support load migration, the source CN node does not allocate any null-NRI or non-broadcast LAI or non-broadcast RAI to the UE. Subsequently, the migration is performed according to the pool area load migration method under the present invention. The detailed migration process is described above, and is not repeated here any further.

In this embodiment, the source CN node judges whether the UE supports load migration according to the UE load migration capability support table preset on the source CN node. In practice, the judgment may be made in other ways.

The UE load migration capability support table includes but is not limited to: UE manufacturer information, UE model, UE version, and identifier about whether the UE supports load migration. Table 1 is an example of a UE load migration capability support table, but Table 1 is for the exemplary purpose only.

**Table 1**

| UE model | Version | Manufacturer | Load migration supported? |
|---|---|---|---|
| Nokia 6610 | V1.0.0 | Nokia | No |
| Nokia 6610 | V2.0.0 | Nokia | Yes |
| Nokia 6650 | V1.1.1 | Nokia | Yes |
| LG 8830 | V1.0.0 | LG | No |
| Motorola T168 | V1.0.1 | Motorola | No |
| ... | | | |

The information in Table 1 may be obtained from the manufacturer, or from the telecom regulatory department, or from an industrial organization, and so on. Besides, the manufacturers and models of the UE are numerous. By default, the UE models not listed in Table 1 may be regarded as not supporting load migration.

The source CN node obtains the information about the model and version of the UE according to the prior art, and the obtaining process is not repeated here any further.

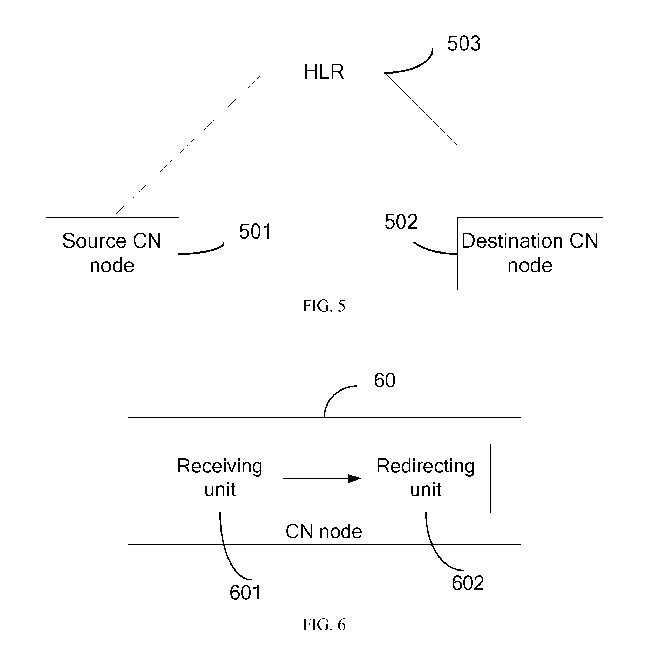

Corresponding to the method of implementing load migration in a pool area, a system for implementing load migration in a pool area is disclosed in an embodiment of the present invention. As shown in FIG. 5, the system includes:
a destination CN node 502, adapted to: send a location update request or a routing area update request to the HLR 503 that is home to the subscriber ready for migration according to the received subscriber identifier after receiving the subscriber identifier of the subscriber ready for migration, and allocating the identifier of the local office to the subscriber ready for migration;
an HLR 503, adapted to: insert the subscriber data of the subscriber ready for migration into the destination CN node 502 after receiving the request, and notify the source CN node 501 to delete the migrated subscriber data; and
a source CN node 501, adapted to delete the migrated subscriber data after receiving the notification.

The source CN node 501 is further adapted to send the subscriber state and the current LAI or RAI of the subscriber ready for migration to the destination CN node 502. The destination CN node 502 is further adapted to store the information received from the source CN node 501. In addition, the source CN node 501 is further adapted to: judge whether the UE supports load migration after receiving a notification indicating the need of load migration from the O&M or receives a location update request or a routing area update request from the UE; and send the identifier of the subscriber ready for migration to the destination CN node 502 if the UE does not support load migration.

As shown in FIG. 6, a CN node is disclosed in an embodiment of the present invention, the CN node 60 includes: a receiving unit 601, adapted to: receive information about the identifier of the subscriber ready for migration, and send the identifier of the subscriber ready for migration to a redirecting unit 602; and a redirecting unit 602, adapted to: send a location update request or a routing area update request to the HLR that is home to the subscriber ready for migration according to the received subscriber identifier after receiving the subscriber identifier of the subscriber ready for migration, migrate the subscriber ready for migration to the CN node, and allocate the identifier of the CN node to the migrated subscriber.

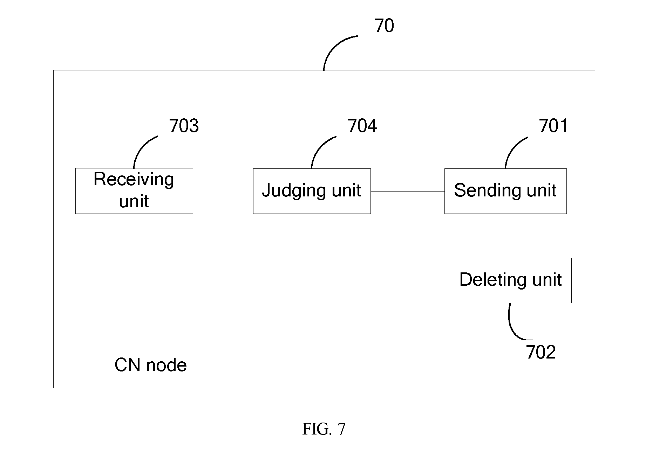

As shown in FIG. 7, a CN node is disclosed in an embodiment of the present invention. The CN node 70 includes a sending unit 701 and a deleting unit 702, and may further include a receiving unit 703 and a judging unit 704. The sending unit 701 is adapted to send the subscriber state and the LAI of the subscriber ready for migration; the deleting unit 702 is adapted to delete the migrated subscriber data after receiving a notification from the HLR that is home to the subscriber ready for migration, where the notification requires deletion of the migrated subscriber data; the receiving unit 703 is adapted to receive a load migration notification from the O&M, or receive a location update request or routing area update request from the UE; and the judging unit 704 is adapted to: judge whether the UE supports load migration when the receiving unit 703 receives the notification or request; and notify the sending unit 701 to send the identifier of the subscriber ready for migration if the UE does not support load migration.

Elaborated above are the objectives, technical solution and benefits of preferred embodiments of the present invention. Although the invention has been described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for implementing load migration in a pool area, comprising:
receiving, by a destination Core Network, CN, node, an identifier of a subscriber to be migrated; and
migrating the subscriber to the destination CN node, and allocating a local office identifier to the migrated subscriber.

2. The method of claim 1, further comprising:
sending, by a source CN node, the identifier of the subscriber to the destination CN node; or
sending, by an Operation and Maintenance System, O&M, the identifier of the subscriber to the destination CN node.

3. The method of claim 1 or claim 2, wherein:
the CN node is a Mobile Switching Center, MSC; and
the migrating, by the destination CN node, of the subscriber to the destination CN node comprises:
sending, by the destination MSC, a location update request to a Home Location Register, HLR of the subscriber according to the received identifier of the subscriber; and
inserting, by the HLR, subscriber data of the subscriber into a Visitor Location Register, VLR, corresponding to the destination MSC after receiving the location update request, modifying a current location of the subscriber in the HLR to be the VLR corresponding to the destination MSC, and notifying the source MSC to delete the migrated subscriber data.

4. The method of claim 3, further comprising:
sending, by the source MSC, a subscriber state and a current Location Area Identifier, LAI, of the subscriber to the destination MSC; and
storing, by the destination MSC, the subscriber state and the current LAI in the corresponding VLR.

5. The method of claim 3, wherein the allocating, by the destination CN node, of the local office identifier to the subscriber comprises:
allocating, by the destination MSC, a Temporary Mobile Subscriber Identifier, TMSI, inclusive of the local office identifier to the subscriber, and sending the TMSI to the source MSC; and
sending, by the source MSC, the TMSI to the subscriber through a location update acceptance message or a TMSI reallocation command message.

6. The method of claim 5, wherein: after the source MSC sends a destination MSC identifier to the subscriber, the method further comprises:
returning, by the subscriber, a TMSI reallocation completion message to the source MSC; and
notifying, by the source MSC, the destination MSC that TMSI reallocation is completed after receiving the TMSI reallocation completion message, and sending a clear command, CLR_CMD, to a Base Station Controller, BSC, or a Radio Network Controller, RNC, that covers the subscriber to release a radio resource connection.

7. The method of claim 3, wherein:
the identifier of the subscriber is a Temporary Mobile Subscriber Identifier, TMSI; and
the sending, by the destination MSC, the location update request to the HLR of the subscriber according to the received identifier of the subscriber comprises: obtaining, by the destination MSC, a subscriber International Mobile Subscriber Identifier, IMSI, from an air interface or an E-interface by using the received TMSI, and sending the location update request to the HLR by using the IMSI as a parameter.

8. The method of claim 1 or claim 2, wherein:
the CN node is a Serving General Packet Radio Service, GPRS, Supporting Node, SGSN; and
the migrating, by the destination CN node, of the subscriber to the destination CN node comprises:
sending, by the destination SGSN, a routing area update request to the HLR of the subscriber according to the received identifier of the subscriber; and
inserting, by the HLR, the subscriber data of the subscriber into the destination SGSN after receiving the routing area update request, and notifying the source SGSN to delete the migrated subscriber data.

9. The method of claim 8, further comprising:
sending, by the source SGSN, a subscriber state and a current Routing Area Identifier, RAI, of the subscriber to the destination SGSN; and
storing, by the destination SGSN, the subscriber state and the current RAI.

10. The method of claim 8, wherein the allocating, by the destination CN node, of the local office identifier to the subscriber comprises:
allocating, by the destination SGSN, a Packet TMSI, P-TMSI, inclusive of the local office identifier to the subscriber, and sending the P-TMSI to the source SGSN; and
sending, by the source SGSN, the P-TMSI to the subscriber through a routing area update acceptance message or a P-TMSI reallocation command message.

11. The method of claim 10, wherein after the source SGSN sends a destination SGSN identifier to the subscriber, the method further comprises:
returning, by the subscriber, a P-TMSI reallocation completion message to the source SGSN; and
notifying, by the source SGSN, the destination SGSN that P-TMSI reallocation is completed after receiving the P-TMSI reallocation completion message, and sending a clear command, CLR_CMD, to a Base Station Controller, BSC, or a Radio Network Controller, RNC, that covers the subscriber to release a radio resource connection.

12. The method of claim 8, wherein:
the identifier of the subscriber is a P-TMSI; and
the sending, by the destination SGSN, the routing area update request to the HLR of the subscriber according to the received identifier of the subscriber comprises: obtaining, by the destination MSC, a subscriber International Mobile Subscriber Identifier, IMSI, from an air interface or an E-interface by using the received P-TMSI, and sending the routing area update request to the HLR by using the IMSI as a parameter.

13. The method of claim 1 or claim 2, wherein:
the identifier of the subscriber is an IMSI.

14. The method of claim 2, wherein before the source CN node sends the identifier of the subscriber to the destination CN node, the method further comprises:
judging whether the UE supports load migration after the source CN node receives a load migration notification from the O&M or receives a location update request or a routing area update request from the UE; and sending the identifier of the subscriber to the destination CN node if the UE does not support load migration.

15. The method of claim 14, wherein the judging about whether the UE supports load migration comprises:
obtaining information about a model of the UE;
querying a UE load migration capability support table preset on the source CN node according to the information about the model of the UE, wherein the UE load migration capability support table comprises at least: the model of the UE, and information about support of load migration;
determining that the UE supports load migration if the query succeeds; or
determining that the UE does not support load migration if the query fails.

16. A system for implementing load migration in a pool area, comprising:
a destination Core Network, CN, node, adapted to: send a location update request or a routing area update request to a Home Location Register, HLR, of a subscriber to be migrated according to a received subscriber identifier after receiving the subscriber identifier of the subscriber, and allocating a local office identifier to the subscriber;
the HLR, adapted to: insert subscriber data of the subscriber into the destination CN node after receiving the request, and notify a source CN node to delete the migrated subscriber data; and
the source CN node, adapted to delete the migrated subscriber data after receiving the notification.

17. The system of claim 16, wherein:
the source CN node is further adapted to send a subscriber state of the subscriber to the destination CN node; and
the destination CN node is further adapted to store information received from the source CN node.

18. The system of claim 17, wherein:
the source CN node is further adapted to: judge whether a User Equipment, UE, supports load migration after receiving a load migration notification from an Operation and Maintenance System, O&M, or receives a location update request or a routing area update request from the UE; and send the subscriber identifier of the subscriber to the destination CN node if the UE does not support load migration.

19. A Core Network, CN, node, comprising:
a receiving unit, adapted to: receive information about an identifier of a subscriber to be migrated, and send the identifier of the subscriber to a redirecting unit; and
the redirecting unit, adapted to: send a location update request or a routing area update request to a Home Location Register, HLR of the subscriber according to the received identifier of the subscriber after receiving the identifier of the subscriber, migrate the subscriber to the CN node, and allocate an identifier of the CN node to the migrated subscriber.

20. A Core Network, CN, node, comprising:
a sending unit, adapted to send a subscriber state and a Location Area Identifier, LAI, of a subscriber to be migrated; and
a deleting unit, adapted to delete migrated subscriber data after receiving a notification from a Home Location Register, HLR of the subscriber, wherein the notification requires deletion of the migrated subscriber data.

21. The CN node of claim 20, further comprising:
a receiving unit, adapted to receive a load migration notification from an Operation and Maintenance System, O&M, or receive a location update request or routing area update request from a User Equipment, UE; and
a judging unit, adapted to: judge whether the UE supports load migration when the receiving unit receives the notification or request; and notify the sending unit to send an identifier of the subscriber if the UE does not support load migration.
